# EUROPÄISCHE PATENTSCHRIFT

(11) **EP 4 234 160 B1**
(45) Veröffentlichungstag und Bekanntmachung des Hinweises auf die Patenterteilung: **02.04.2025**
(21) Anmeldenummer: 23163827.1
(22) Anmeldetag: 29.05.2015
(51) Int. Cl.: B23Q 9/00, B27B 9/04, B23D 47/02

(54) **FÜHRUNGSSYSTEM MIT HAND-WERKZEUGMASCHINE UND FÜHRUNGSSCHIENE**
GUIDE SYSTEM COMPRISING A HANDHELD MACHINE TOOL AND GUIDE RAIL
SYSTÈME DE GUIDAGE DOTÉ D'UNE MACHINE-OUTIL PORTATIVE ET RAILS DE GUIDAGE

(30) Priorität: 15.07.2014 DE 102014010486
(43) Veröffentlichungstag der Anmeldung: 30.08.2023
(62) Teilanmeldung aus: 15169786.9
(73) Patentinhaber: Festool GmbH, 73240 Wendlingen am Neckar (DE)
(72) Erfinder: Fleischmann, Bernd, 73235 Weilheim (DE)
(74) Vertreter: Patentanwälte Bregenzer und Reule Partnerschaftsgesellschaft mbB

(56) Entgegenhaltungen:
- EP-A1- 2 581 167
- DE-A1- 102004 017 420
- DE-A1- 102006 025 137
- DE-A1- 102011 087 426
- DE-U1- 202006 004 228
- DE-U1- 9 206 828
- US-A1- 2008 034 596

## Beschreibung

Die Erfindung betrifft ein Führungssystem umfassend eine ein Führungselement aufweisende Hand-Werkzeugmaschine und eine mit ihrer Unterseite auf einen Untergrund auflegbare Führungsschiene, an deren Oberseite eine Schienen-Führungsfläche für eine Führungselement-Führungsfläche an der Unterseite des Führungselements der Hand-Werkzeugmaschine vorgesehen ist, gemäß dem Oberbegriff des Anspruchs 1.

Ein derartiges Führungssystem ist beispielsweise in DE 10 2011 087 426 A1 erläutert.

Bei einem aus DE 92 06 828 U1 bekannten Führungssystem sind an der Oberseite der Schienen-Führungsfläche Führungsnuten mit Hinterschnitten vorgesehen, in welchen ein Führungsschlitten geführt ist. Die Anordnung ist im Prinzip für einen stationären Gebrauch vorgesehen, nämlich um Schrägschnitte vorzunehmen.

Ausgehend davon ist es die Aufgabe der vorliegenden Erfindung, ein Führungssystem bereitzustellen, das eine gute Längsführung der Hand-Werkzeugmaschine entlang der Führungsschiene ermöglicht und gleichzeitig der Hand-Werkzeugmaschine bezüglich der Führungsschiene in der Tiefenrichtung guten Halt bietet.

Zur Lösung der Aufgabe ist ein Führungssystem gemäß des Anspruchs 1 vorgesehen.

Neben dem Führungssystem als Ganzes wird auch eine Hand-Werkzeugmaschine für die Führungsschiene offenbart, die sich dann wie folgt definieren lässt:
Hand-Werkzeugmaschine mit einem Führungselement für eine mit ihrer Unterseite auf einen Untergrund auflegbare Führungsschiene, an deren Oberseite eine Schienen-Führungsfläche für eine Führungselement-Führungsfläche an der Unterseite des Führungselements der Hand-Werkzeugmaschine vorgesehen ist, wobei an den Führungsflächen mindestens ein Längsführungsvorsprung und mindestens eine Längsführungsaufnahme vorgesehen sind, die zur Längsführung der Hand-Werkzeugmaschine entlang einer Längsachse der Führungsschiene und des Führungselements ineinander eingreifen, und wobei zwischen der Führungsschiene und dem Führungselement Hintergreifstrukturen vorhanden sind, die das Führungselement in einer zu den Führungsflächen winkeligen, insbesondere rechtwinkeligen Tiefenrichtung an der Führungsschiene in einem Sinne halten, dass die Führungsflächen in Kontakt bleiben, wobei die Hintergreifstrukturen mindestens einen vor die Schienen-Führungsfläche vorstehenden Hintergreifvorsprung zum Eingriff in mindestens eine sich an der Führungselement-Führungsfläche parallel zu der Längsachse erstreckende Hintergreifaufnahme umfassen, wobei die mindestens eine Hintergreifaufnahme sich parallel zu der Längsachse erstreckt oder einen Bestandteil einer Anordnung von parallel zu der Längsachse hintereinander angeordneten Hintergreifaufnahmen bildet und zum Eingriff des mindestens einen Hintergreifvorsprungs ausgestaltet ist, der parallel zu der Längsachse verläuft und/oder einen Bestandteil einer Anordnung von parallel zu der Längsachse hintereinander angeordneten Hintergreifvorsprüngen bildet.

Eine Führungsschiene für ein derartiges Führungssystem lässt sich wie folgt definieren:
Führungsschiene, die mit ihrer Unterseite auf einen Untergrund auflegbar ist und an ihrer Oberseite eine Schienen-Führungsfläche für eine Führungselement-Führungsfläche an der Unterseite eines Führungselements einer Hand-Werkzeugmaschine aufweist, wobei an den Führungsflächen mindestens ein Längsführungsvorsprung und mindestens eine Längsführungsaufnahme vorgesehen sind, die zur Längsführung der Hand-Werkzeugmaschine entlang einer Längsachse der Führungsschiene und des Führungselements ineinander eingreifen, und wobei zwischen der Führungsschiene und dem Führungselement Hintergreifstrukturen vorhanden sind, die das Führungselement in einer zu den Führungsflächen winkeligen, insbesondere rechtwinkeligen, Tiefenrichtung an der Führungsschiene in einem Sinne halten, dass die Führungsflächen in Kontakt bleiben, wobei die Hintergreifstrukturen mindestens einen vor die Schienen-Führungsfläche vorstehenden Hintergreifvorsprung zum Eingriff in mindestens eine sich an der Führungselement-Führungsfläche parallel zu der Längsachse erstreckende Hintergreifaufnahme umfassen, wobei der mindestens eine Hintergreifvorsprung parallel zu der Längsachse verläuft und/oder einen Bestandteil einer Anordnung von parallel zu der Längsachse hintereinander angeordneten Hintergreifvorsprüngen bildet und zum Eingriff in die mindestens eine Hintergreifaufnahme vorgesehen ist, die sich parallel zu der Längsachse erstreckt oder einen Bestandteil einer Anordnung von parallel zu der Längsachse hintereinander angeordneten Hintergreifaufnahmen bildet.

Bei den Komponenten (Hand-Werkzeugmaschine und Führungsschiene) und dem Führungssystem als Ganzes ist es ein Grundgedanke, dass der Längsführungsvorsprung und die Längsführungsaufnahme für die Längsführung entlang der Längsachse vorgesehen sind und davon separat die Hintergreifstrukturen, die in Bezug auf die Tiefenrichtung dem System bestehend aus Führungsschiene und Hand-Werkzeugmaschine Halt bieten, wobei der oder die Hintergreifvorsprünge vor die Führungsfläche der Führungsschiene vorstehen und die Hintergreifaufnahme direkt an der Führungselement-Führungsfläche der Hand-Werkzeugmaschine angeordnet ist, insbesondere nicht vor diese vorsteht. Somit kann die Hand-Werkzeugmaschine ohne weiteres auch mit Führungsschienen oder Führungslinealen verwendet werden, die keinen Hintergreifvorsprung haben, also beispielsweise zum Längsführen von sozusagen konventionellen Hand-Werkzeugmaschinen dienen.

Bei der Hand-Werkzeugmaschine handelt es sich vorzugsweise um eine Sägemaschine, insbesondere um eine Tauchsäge oder eine Kappsäge oder eine Pendelhaubensäge. Aber auch andere Hand-Werkzeugmaschinen, zum Beispiel Fräsmaschinen, Schleifmaschinen oder dergleichen, können auf diesem Wege geführt werden. Die Hand-Werkzeugmaschine ist vorzugsweise eine Trenn-Hand-Werkzeugmaschine. Bei dem Werkzeug handelt es sich also vorzugsweise um ein Trennwerkzeug, beispielsweise um ein Sägeblatt.

Die Hand-Werkzeugmaschine weist beispielsweise einen elektrischen oder pneumatischen Antriebsmotor auf. Vorzugsweise ist die Hand-Werkzeugmaschine mit einem Energiespeicher, zum Beispiel einem Akkupack, versehen, so dass sie unabhängig von einem elektrischen Energieversorgungsnetz betrieben werden kann. Aber auch eine kabelgebundene Hand-Werkzeugmaschine, d.h. eine Hand-Werkzeugmaschine mit einem Anschlusskabel für ein elektrisches Energieversorgungsnetz, ist ohne weiteres möglich.

Beispielsweise ist der Längsführungsvorsprung im Querschnitt U-förmig und die Längsführungsaufnahme ebenfalls im Querschnitt U-förmig. Es ist bevorzugt, wenn der Längsführungsvorsprung, insbesondere eine Längsrippe, nach oben vor die Schienen-Führungsfläche vorsteht, während die Längsführungsaufnahme, insbesondere eine Längsnut oder ein Längsschlitz, sozusagen als eine Vertiefung oder ein Rücksprung an der Unterseite des Führungselements, nämlich der Führungselement-Führungsfläche, ausgestaltet ist.

Das Führungssystem eignet sich beispielsweise für sogenannte Kappschnitte. Weil die Führungsschiene an der Hand-Werkzeugmaschine, beispielsweise der Säge, verbleibt, kann diese an den jeweiligen Einsatzort zusammen mit der Hand-Werkzeugmaschine gebracht werden, d.h. der Bediener ergreift beispielsweise nur die Hand-Werkzeugmaschine und nimmt dabei gleichzeitig die Führungsschiene mit, um sie beispielsweise an einem Werkstück, insbesondere einem Holzstück, anzulegen.

Die Schienen-Führungsfläche und die Führungselement-Führungsfläche liegen zweckmäßigerweise im Wesentlichen über die gesamte Querbreite des Führungselements zumindest im Wesentlichen flächig aneinander an.

Bevorzugt ist es, wenn die Schienen-Führungsfläche und die Führungselement-Führungsfläche quer zur Längsachse an beiden Seiten des mindestens einen Hintergreifvorsprungs und der mindestens einen Hintergreifaufnahme in einem insbesondere flächigen Führungskontakt sind.

Die mindestens eine Hintergreifaufnahme hat vorzugsweise einen Querabstand zu beiden Queraußenseiten des Führungselements. In anderen Worten ist die mindestens eine Hintergreifaufnahme zweckmäßigerweise zwischen den Queraußenseiten des Führungselements angeordnet.

Bevorzugt ist die mindestens eine Hintergreifaufnahme als ein Rücksprung ausgestaltet, d.h. sie steht nicht vor die Führungselement-Führungsfläche vor.

Bezüglich der Querbreite des Führungselements können beispielsweise zwei oder weitere Hintergreifaufnahmen in einem Querabstand zueinander vorgesehen sein.

Bezüglich des Hintergreifvorsprungs und der Hintergreifaufnahme sind mehrere Querschnittskonturen denkbar. Beispielsweise ist der Hintergreifvorsprung ebenso wie die Hintergreifaufnahme im Querschnitt T-förmig, L-förmig oder Y-förmig. Es können auch einer oder mehrere derartige Querschnitte aufweisende Hintergreifabschnitte vorgesehen sein. Ferner ist es möglich, dass der mindestens eine Hintergreifvorsprung und die mindestens eine Hintergreifaufnahme Schwalbenschwanzkonturen aufweisen oder mit Schwalbenschwanzkonturen ineinander eingreifen.

Der mindestens eine Hintergreifvorsprung kann z.B. pilzförmig sein. Es ist auch möglich, dass mehrere pilzförmige Hintergreifvorsprünge in Richtung der Längsachse hintereinander an der Schienen-Führungsfläche angeordnet sind.

Vorteilhaft ist es, wenn die Hintergreifaufnahme den mindestens einen Hintergreifvorsprung gabelförmig aufnimmt.

Die mindestens eine Hintergreifaufnahme des Führungselements der Hand-Werkzeugmaschine ist vorzugsweise an einem Längsschlitz oder an einer Längsnut angeordnet, die sich parallel zu der Längsachse des Führungselements erstreckt. Die Hintergreifaufnahme wird von mindestens einem Hintergreifschenkel begrenzt, der in einen Innenraum des Längsschlitzes oder der Längsnut zum Hintergreifen des mindestens einen Hintergreifvorsprungs vorsteht. Bevorzugt sind einander gegenüberliegende Hintergreifschenkel vorgesehen, die jeweils einen Hintergriff des mindestens einen Hintergreifvorsprungs ermöglichen. Zwischen den beiden Hintergreifschenkeln ist dann beispielsweise ein Schlitz vorgesehen, durch den hin durch ein nachfolgend noch erläuterter Tragschenkel des Hintergreifvorsprungs oder der Hintergreifvorsprünge hindurchtreten kann.

Eine vorteilhafte Maßnahme sieht vor, dass der Boden der Längsnut oder des Längsschlitzes im Bereich des mindestens einen Hintergreifschenkels unterbrochen ist bzw. zur Oberseite des Führungselements offen ist, was eine leichtere Entformung des Führungselements aus einem Gusswerkzeug ermöglicht.

Eine Unterseite des mindestens einen Hintergreifschenkels ist vorzugsweise mit der Führungselement-Führungsfläche einstückig oder fluchtet mit dieser. Es ist auch möglich, dass der Hintergreifschenkel einen Abstand zu der Führungselement-Führungsfläche hat, jedenfalls nicht vor die Führungselement-Führungsfläche, bei Gebrauch in der Regel nach unten, nämlich zur Schiene-Führungsfläche der Führungsschiene hin, vorsteht.

Der mindestens eine Hintergreifvorsprung weist zweckmäßigerweise einen vor die Schienen-Führungsfläche vorstehenden Tragschenkel auf. Beispielsweise steht der Tragschenkel rechtwinkelig von der Schienen-Führungsfläche ab, bei Gebrauch in der Regel beispielsweise nach oben. Von dem Tragschenkel steht mindestens ein Halteschenkel winkelig, beispielsweise rechtwinkelig oder auch stumpfwinkelig oder spitzwinkelig zum Hintergreifen der mindestens einen Hintergreifaufnahme des Führungselements der Hand-Werkzeugmaschine ab.

Die Hintergreifstrukturen, beispielsweise der vorgenannte Hintergreifschenkel oder der Halteschenkel oder beide, weisen zweckmäßigerweise mindestens eine Einführschräge auf. Die Einführschräge umfasst beispielsweise Rundungen, Schrägflächen, Trichterflächen oder dergleichen. Jedenfalls ist bevorzugt, wenn die Schrägfläche oder Einführschräge bezüglich der Längsachse schräg verläuft. Somit können die Hintergreifstrukturen leichter in Eingriff miteinander gebracht werden.

An dieser Stelle sei bemerkt, dass es vorteilhaft ist, wenn die Führungsschiene stirnseitig offen ist. Dadurch ist es z.B. möglich, das Führungselement der Hand-Werkzeugmaschine, beispielsweise ein Sägetisch oder eine Führungsplatte, von der Stirnseite her sozusagen auf die Führungsschiene aufzufädeln oder aufzugleisen oder einzugleisen.

Das Führungselement der Hand-Werkzeugmaschine weist zweckmäßigerweise bezüglich der Längsachse in einem Abstand zueinander angeordnete Hintergreifstrukturen auf, beispielsweise zwei oder drei Hintergreifstrukturen. In dem Abstand sind zweckmäßigerweise keine den Hintergreifvorsprung der Führungsschiene hintergreifende Hintergreifkonturen vorgesehen. Somit ist es beispielsweise möglich, dass der mindestens eine Hintergreifvorsprung der Führungsschiene bezüglich der Tiefenrichtung frei in die oder eine Längsnut oder eines Längsschlitzes des Führungselements der Hand-Werkzeugmaschine einführbar ist.

Die zueinander beabstandeten Hintergreifstrukturen des Führungselements sorgen zweckmäßigerweise an den notwendigen Stellen für den Halt der Hand-Werkzeugmaschine an der Führungsschiene in Bezug auf die Tiefenrichtung.

Vorzugsweise ist vorgesehen, dass in dem Abstand zwischen den Hintergreifstrukturen ein gewisses Bewegungsspiel zwischen der Führungsschiene und dem Führungselement möglich ist und/oder das in dem Abstand zwischen den Hintergreifstrukturen kein Kontakt zwischen Führungselement und Führungsschiene vorhanden ist. Dies kann dazu beitragen, dass sich das Führungselement an der Führungsschiene nicht verkantet.

In dem Abstand zwischen den Hintergreifstrukturen ist zweckmäßigerweise eine Nut des Führungselements, an welcher die Hintergreifstrukturen vorgesehen ist, zur Führungsschiene hin offen. Somit können auch sich eventuell in dieser Nut ansammelnde Späne, Stäube oder dergleichen, in dem Abstand zwischen den Hintergreifstrukturen aus der Nut heraus gelangen.

Das Führungselement der Hand-Werkzeugmaschine umfasst zweckmäßigerweise zwei, vorzugsweise drei oder vier, in Bezug auf die Längsachse in einem Abstand zueinander angeordnete Hintergreifaufnahmen, wobei in dem Abstand der Hintergreifvorsprung oder die Anordnung der Hintergreifvorsprünge der Führungsschiene nicht durch eine Hintergreifaufnahme oder einen Hintergreifschenkel des Führungselements der Hand-Werkzeugmaschine hintergriffen ist oder in Bezug auf die Tiefenrichtung keine Abstützung an dem Führungselement hat.

In dem Abstand ist also vorteilhaft keine den Hintergreifvorsprung oder die Hintergreifvorsprünge der Führungsschiene hintergreifende Struktur vorhanden, so dass beispielsweise die bereits erwähnte Nut, in welche der Hintergreifvorsprung oder die Hintergreifvorsprünge eingreifen, zur Führungsschiene hin offen ist.

Es ist aber auch möglich, dass in diesem Bereich zwar keine vollständige Öffnung vorhanden ist, sondern ein Schenkel oder sonstiger Vorsprung der Hintergreifstrukturen des Führungselements zu dem mindestens einen Hintergreifvorsprung der Führungsschiene vorsteht. Zwischen diesem Vorsprung der Hintergreifstrukturen des Führungselements und dem Hintergreifvorsprung der Führungsschiene ist jedoch in diesem Fall kein formschlüssiger Kontakt oder Kontakt im Sinne einer Abstützung bezüglich der Tiefenrichtung vorgesehen.

Vorteilhaft ist vorgesehen, dass in Bezug auf die Längsachse am vorderen und hinteren Endbereich oder Längsendbereichen des Führungselements der Hand-Werkzeugmaschine jeweils eine Hintergreifaufnahme vorhanden ist. Zwischen diesen Hintergreifaufnahmen kann keine weitere Hintergreifaufnahme vorgesehen sein. Besonders bevorzugt ist jedoch längsmittig bezüglich der beiden vorgenannten, an Endbereichen oder Längsendbereichen des Führungselements angeordneten Hintergreifaufnahmen eine weitere Hintergreifaufnahmen vorgesehen, was auch in der Zeichnung dargestellt ist.

Zwischen den zueinander beabstandeten Hintergreifaufnahmen des Führungselements ist zweckmäßigerweise ein Freiraum vorhanden, in welchen der mindestens eine Hintergreifvorsprung oder die Hintergreifvorsprünge der Führungsschiene eingreifen können. Der Freiraum ist zweckmäßigerweise als eine Längsnut ausgestaltet, die sich in der Richtung der Längsachse erstreckt.

Der Freiraum hat zweckmäßigerweise eine Aufweitung, sodass nur die Hintergreifaufnahmen in Kontakt mit dem mindestens einen Hintergreifvorsprung der Führungsschiene sind.

Eine vorteilhafte Ausführungsform sieht vor, dass die Querführung quer zur Längsachse und quer zur Tiefenrichtung nicht von den Hintergreifstrukturen geleistet wird, sondern von dem Längsführungsvorsprung und der Längsführungsaufnahme. Es beispielsweise vorteilhaft, wenn einander zugewandte, sich parallel zu den Führungsflächen erstreckende Flächen des Längsführungsvorsprungs und der Längsführungsaufnahme oder auch des Hintergreifvorsprungs und der Hintergreifaufnahme nicht in einem Führungskontakt miteinander sind.

Es ist zweckmäßigerweise vorgesehen, dass das Führungselement der Hand-Werkzeugmaschine quer zu der Längsachse und parallel zu den Führungsflächen ausschließlich durch den Längsführungsvorsprung und die Längsführungsaufnahme geführt ist. Das ist so zu verstehen, dass zwar partiell oder temporär ein Berührkontakt zwischen dem Hintergreifvorsprung und der Hintergreifaufnahme quer zur Längsachse, z.B. in Querrichtung parallel zu den Führungsflächen, vorhanden sein kann, dieser jedoch nicht eine wesentliche Quer-Führungsfunktion quer zur Längsachse parallel zu den Führungsflächen leistet oder leisten muss.

Erfindungsgemäß ist vorgesehen, dass an der Führungsschiene nur ein einziger sich in Richtung der Längsachse erstreckender Hintergreifvorsprung oder nur eine einzige Anordnung linear hintereinander entlang der Längsachse angeordneter Hintergreifvorsprünge vorgesehen ist oder an dem Führungselement nur eine sich in Richtung der Längsachse erstreckende Hintergreifaufnahme oder nur eine einzige Anordnung parallel zu der Längsachse hintereinander angeordneter Hintergreifaufnahmen vorhanden ist.

Eine bevorzugte Ausführungsform sieht vor, dass eine Einstelleinrichtung zur Verstellung eines Querabstands zwischen den in der vorgenannten Querrichtung, also in der parallel zu den Führungsflächen verlaufenden Richtung, führenden Flächen vorgesehen ist. Beispielsweise ist die Einstelleinrichtung zur Verstellung eines Querabstands zwischen einander gegenüberliegenden Führungsflächen der mindestens einen Längsführungsaufnahme oder zur Verstellung in einander entgegengesetzter und voneinander abgewandten Außenseiten des Längsführungsvorsprungs vorgesehen. In beiden Fällen kann die Querführung in der vorgenannten Querrichtung, also nicht der Tiefenrichtung, verbessert werden. Bevorzugt sind mehrere, beispielsweise zwei, Einstelleinrichtungen, die einen Längsabstand in Richtung der Längsachse haben.

Bevorzugt ist es, wenn der mindestens eine Hintergreifvorsprung als eine Längsrippe ausgestaltet ist.

Die Erfindung sieht vor, dass sich der Hintergreifvorsprung etwa mittig zwischen sich parallel zur Längsrichtung erstreckenden Seiten, sozusagen Längsseiten, der Führungsschiene befindet oder sieht bei der mindestens einen Hintergreifaufnahme eine mittige Anordnung vor, d.h. dass sie etwa mittig zwischen sich parallel zur Längsrichtung erstreckenden Seiten, zum Beispiel Schmalseiten oder Längsseiten, des Führungselements der Hand-Werkzeugmaschine angeordnet ist.

Zweckmäßigerweise ist vorgesehen, dass das Führungselement quer außen, also an den Längsseiten, nicht im Hintergriff mit der Führungsschiene ist, dort also keine Hintergreifstrukturen vorgesehen sind.

Vorzugsweise sind ausschließlich an der Führungselement-Führungsfläche eine oder mehrere Hintergreifaufnahmen vorgesehen, während die zur Arbeitsrichtung oder Längsachse parallelen Längsseiten ungeführt sind oder nur zur Führung in Richtung der Längsachse dienen.

Die Hand-Werkzeugmaschine weist zweckmäßigerweise einen Handgriff zum Führen der Handwerkzeugmaschine auf. Bevorzugt erstreckt sich der Handgriff oberhalb der Längsführungsaufnahme oder des Längsführungsvorsprungs. Besonders bevorzugt ist auch eine Anordnung des Handgriffs oberhalb der Hintergreifaufnahme. Weiterhin ist es zweckmäßig, wenn der Handgriff in Arbeitsrichtung vorn angeordnet ist. Bevorzugt ist eine Anordnung unmittelbar vorn am Führungselement. Auf diese Weise kann jedenfalls der Benutzer im Bereich des Handgriffes Kraft auf das Führungselement ausüben und somit dazu beitragen, dass das Führungselement auf der Führungsschiene in Bezug auf die Tiefenrichtung optimal gehalten wird und/oder auch die Längsführung in Arbeitsrichtung bzw. entlang der Längsachse besonders gut gelingt.

Die Führungsschiene kann eine starre Führungsschiene sein, d.h. dass sie beispielsweise ganz oder teilweise aus einem harten Kunststoff und/oder Metall oder dergleichen besteht. Die Führungsschiene kann auch ganz oder teilweise aus Gummi oder einem flexiblen Kunststoff bestehen.

Die Führungsschiene kann auch eine Klapp-Führungsschiene sein, d.h. dass sie mehrere, mindestens zwei Segmente hat, die zueinander gelenkig gelagert sind und somit beispielsweise in eine Transportstellung verstellbar sind. Für einen Gebrauch der Führungsschiene klappt man die Segmente in eine lang gestreckte Konfiguration, seine Gebrauchsstellung. Weiterhin ist es möglich, dass die Führungsschiene ganz oder zumindest abschnittsweise flexibel ist. Besonders bevorzugt ist es, wenn die Führungsschiene beispielsweise zu einem Wickel aufwickelbar ist.

Weiterhin sind optionale Maßnahmen derart möglich, dass die Führungsschiene beispielsweise an der Oberseite eine Gleitbeschichtung und/oder an ihrer Unterseite eine Haftbeschichtung, insbesondere eine Gummierung, zum Auflegen auf dem Untergrund hat. Im Bereich einer Längsseite, die beispielsweise zum Führen oder Anlegen eines Trenn-Werkzeugs geeignet ist oder jedenfalls neben dem Werkzeug verläuft, ist vorzugsweise eine abschneidbare Kante und/oder ein Splitterschutzelement oder ein Ausreißschutzelement vorgesehen. Das Splitterschutzelement oder Ausreißschutzelement wirkt einem Ausreißen des Werkstücks bei der Bearbeitung durch das Werkzeug, z.B. einem Sägen, entgegen. Vorzugsweise ist vorgesehen, dass beispielsweise bei einem ersten Sägeschnitt oder Trennschnitt mit der Hand-Werkzeugmaschine die abschneidbare Kante oder Sägekante auf ein geeignetes Maß gekürzt wird.

An der Führungsschiene können auch Haltemittel vorgesehen sein, um die Führungsschiene an einem Untergrund zu befestigen, beispielsweise Durchtrittsöffnungen für Klemmmittel, Schraubzwingen etc. oder Bereiche zum Anklemmen an einen Untergrund oder dergleichen. Auch beispielsweise mindestens ein Saugkopf oder dergleichen kann vorteilhaft vorgesehen sein, um die Führungsschiene am Untergrund für einen Arbeitsvorgang zu befestigen.

Schließlich ist es vorteilhaft, wenn die Führungsschiene noch Führungsmittel oder Haltemittel für beispielsweise einen Schlitten oder auch eine Rückhol-Federanordnung aufweist, die zum Zurück-Verstellen der Hand-Werkzeugmaschine in eine Ausgangslage vorgesehen ist.

Nachfolgend wird ein Ausführungsbeispiel der Erfindung anhand der Zeichnung erläutert. Es zeigen:

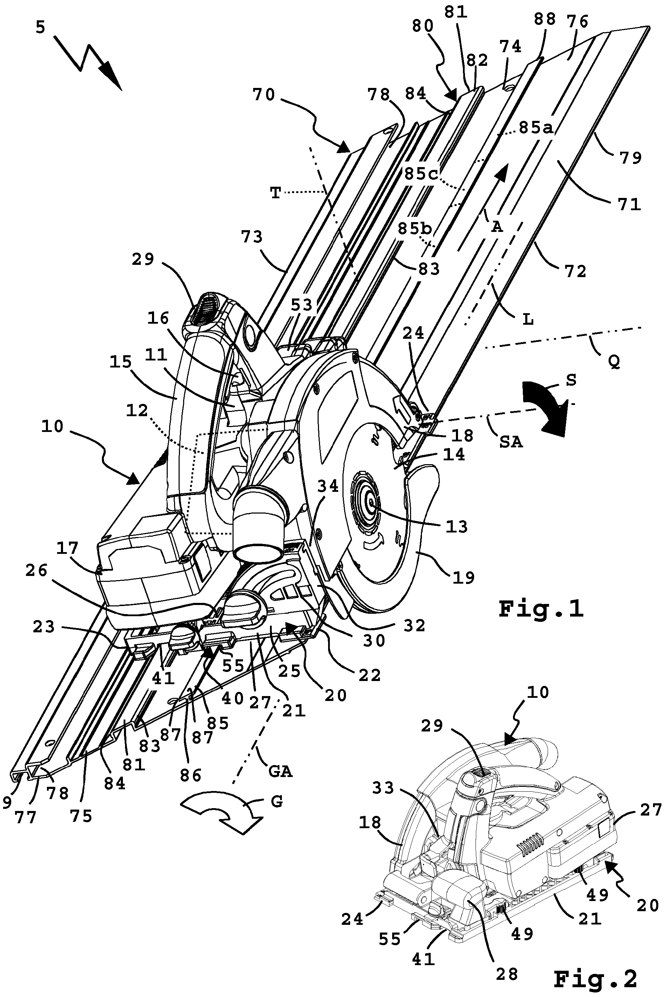

- Figur 1: eine perspektivische Schrägansicht eines Führungssystems mit einer Führungsschiene und einer Hand-Werkzeugmaschine,
- Figur 2: eine perspektivische Schrägansicht der Hand-Werkzeugmaschine aus Figur 1 von schräg vorn,
- Figur 3: eine untere perspektivische Ansicht eines Führungselements der Hand-Werkzeugmaschine gemäß der vorstehenden Figuren, und
- Figur 4: eine Frontalansicht auf das Führungssystem gemäß Figur 1 von vorn (entgegen der Arbeitsrichtung).

Eine Hand-Werkzeugmaschine 10 weist ein Maschinengehäuse 11 auf, in welchem ein Antriebsmotor 12 zum Antreiben einer Werkzeugaufnahme 13 vorgesehen ist. An der Werkzeugaufnahme 13 ist ein Werkzeug 14 lösbar befestigbar, beispielsweise ein Sägeblatt oder ein sonstiges Trennwerkzeug. Bei der Hand-Werkzeugmaschine handelt es sich also beispielsweise um eine Säge oder allgemeiner gesagt um eine Trennmaschine. Das Maschinengehäuse 11 ist mit einem Handgriff 15 versehen, an welchem ein Schalter 16 zum Einschalten oder Ausschalten des Antriebsmotors 12 angeordnet ist. Weiterhin ist am Maschinengehäuse 11 ein Anschluss für einen Energiespeicher 17, beispielsweise einen Akkupack, vorgesehen, um den Antriebsmotor 12 oder allgemeiner gesagt die Hand-Werkzeugmaschine 10 mit elektrischer Energie zu versorgen. Eine Energieversorgung mit einem Netzkabel zum Anschluss an ein elektrisches Energieversorgungsnetz ist ohne weiteres auch möglich, jedoch nicht dargestellt.

Das Werkzeug 14 ist durch eine obere, feste Abdeckung 18 geschützt und unten durch eine bewegliche Abdeckung 19, die in den Bereich der festen Abdeckung 18 schwenken kann. Es handelt sich bei der Hand-Werkzeugmaschine 10 um eine Pendelhaubensäge, d.h. dass die bewegliche Abdeckung 19 zur oder unter die feste Abdeckung 18 schwenken kann, um den in der Zeichnung unteren Bereich des Sägeblatts oder Werkzeugs 14 für einen Sägeschnitt oder Trennschnitt freizugeben.

An der Unterseite des Maschinengehäuses 11 ist ein Führungselement 20 vorgesehen. Das Führungselement 20 ist plattenartig und bildet eine Führungsplatte 21. Das Werkzeug 14 ist in Arbeitsrichtung A an der rechten Seite 22 vorgesehen, während der Energiespeicher 17 sich im Bereich einer linken Seite 23 und einer Rückseite 25 des Führungselements 20 befindet. Eine Vorderseite 24 des Führungselements 20 ist in Arbeitsrichtung A vorn.

Das Maschinengehäuse 11 ist also an der Oberseite 26 des Führungselements 20 angeordnet, während die Unterseite des Führungselements 20 eine Führungsfläche 27 bildet. An der Oberseite 26 ist noch ein Handgriff 28 vorgesehen, mit dem die Hand-Werkzeugmaschine 10 zusätzlich zum Handgriff 15 durch einen Bediener günstig ergriffen und geführt werden kann. Der Handgriff 28 ist beispielsweise in der Art eines Knebels ausgestaltet, so dass er von einem Bediener bequem ergriffen werden kann. Der Bediener kann beispielsweise mit seinem Handballen auf den Handgriff 28 drücken. Der Knebel es beispielsweise an einem säulenartigen der Träger angeordnet, der nach oben vor die Oberseite 26 der Führungsplatte 21/des Führungselements 20 vorsteht.

Auf diese Weise wird auch die nachfolgend erläuterte Führung der Hand-Werkzeugmaschine 10 entlang einer Führungsschiene 70 erleichtert. Die Hand-Werkzeugmaschine 10 und die Führungsschiene 70 bilden ein Führungssystem 5.

An der Unterseite, nämlich der Führungsfläche 27, des Führungselements 20 sind Führungsaufnahmen 40 vorgesehen, die zum Eingriff von Führungsvorsprüngen 80 der Führungsschiene 70 vorgesehen sind. Die Hand-Werkzeugmaschine 10 ist entlang der Führungsschiene 70 in einer Arbeitsrichtung A, nämlich in Richtung einer Längsachse L, zu führen, um Schnitte in ein Werkstück (nicht dargestellt) einzubringen.

Dabei kann das Werkzeug 14 verschiedene Stellungen relativ zur Führungsschiene 70 einnehmen:
Anhand einer Tiefeneinstelleinrichtung mit einem Tiefeneinstelllager 36, die durch Drücken eines Betätigungselements 29 entriegelt wird, kann die Werkzeugaufnahme 13 relativ zum Führungselement 20 um eine Achse SA verschwenkt werden, was durch einen Pfeil S in der Zeichnung angedeutet ist. Somit kann die Tiefe des Werkzeugs 14 relativ zur Führungsschiene 70 verstellt werden, mithin also auch die Eindring- oder Schnitttiefe des Werkzeugs 14 in das Werkstück eingestellt werden.

Anhand eines Gehrungslagers 30 können Schrägschnitte in das Werkstück eingebracht werden. Das Maschinengehäuse 11 und somit die Werkzeugaufnahme 13 können nämlich angedeutet durch einen Pfeil G um eine Gehrungsachse GA schwenken. Das Gehrungslager 30 ist zweiteilig und umfasst zwei nach oben vor die Oberseite 26 des Führungselements 20 vorstehende Lagerelemente 31, 32 sowie an diesen geführte Lagerelemente 33, 34, die mit dem Maschinengehäuse 11 verbunden sind.

Das Führungselement 20 gleitet mit seiner unterseitigen Führungsfläche 27 an einer oberseitigen Führungsfläche 76 der Führungsschiene 70 entlang. Die Führungsschiene weist einen Schienenkörper 71 auf, an dessen in Arbeitsrichtung A rechter Seite 72 das Werkzeug 14 entlang bewegt wird. Die rechte Seite 72 bildet sozusagen eine Schneidkante aus. Vorzugsweise ist vorgesehen, dass die rechte Seite 72, der beispielsweise eine Gummilippe oder dergleichen angeordnet sein kann, mit einem ersten Sägeschnitt des Werkzeugs 14 gekürzt wird. Vor die in Arbeitsrichtung A linke Seite 73 steht die Hand-Werkzeugmaschine 10 vorzugsweise nicht vor, wobei das durchaus auch der Fall sein könnte.

Ein Vorderseite 74 oder eine Rückseite 75 der Führungsschiene 70 oder beide können rechtwinkelig oder auch, wie bei der Rückseite 75 der Fall, nicht rechtwinkelig schräg zu den rechten und linken Seiten 72, 73 sein, so dass die Führungsschiene 70 beispielsweise an ein schräg verlaufendes Werkstück mit seine Stirnseiten, nämlich der Vorderseite 74 und/oder der Rückseite 75, anlegbar ist.

An der in Arbeitsrichtung linken Seite 73 der Führungsschiene 70 ist beispielsweise eine nach unten, zur Unterseite 77 der Führungsschiene 70 offene Haltenut 78 vorgesehen. Diese kann beispielsweise dazu dienen, einen in der Zeichnung nicht dargestellten Schlitten oder eine Rückholfeder zu halten. Auch eine Befestigung an einem Untergrund mit beispielsweise in die Haltenut 78 eingeführten Halteelementen, beispielsweise Schrauben, Klemmen oder dergleichen, ist ohne weiteres denkbar. Eine weitere, neben der Haltenut 78 angeordnete, Haltenut 79 ist seitlich offen und kann beispielsweise auch zum Befestigen von Haltemitteln dienen oder auch für eine Rückholfeder, einen Schlitten oder dergleichen eine zusätzliche Halterung und/oder Führung darstellen.

Für die Führung der Hand-Werkzeugmaschine 10, nämlich des Führungselements 20, entlang der Führungsschiene 70 bezüglich der Arbeitsrichtung A, also in Richtung der Längsachse L, sowie auch quer dazu, nämlich in einer Tiefenrichtung T, die rechtwinkelig zu der Längsachse L und auch recht winkelig zu den Ebenen der Führungsflächen 27, 76 ist, sind Führungsaufnahmen 40 des Führungselements 20 und Führungsvorsprünge 80 der Führungsschiene 70 vorgesehen.

Für eine Längsführung des Führungselements 20 und somit der Hand-Werkzeugmaschine 10 entlang der Arbeitsrichtung A sind eine Längsführungsaufnahme 41 an dem Führungselement 20, nämlich dessen unterseitiger Führungsfläche 27, vorgesehen, in die ein Längsführungsvorsprung 81 der Führungsschiene 70 eingreift. Der Längsführungsvorsprung 81 führt das Führungselement 20 quer zur Arbeitsrichtung A in einer Querrichtung Q, die parallel zu den Ebenen der Führungsflächen 27, 76 verläuft.

Der Längsführungsvorsprung 81 weist beispielsweise eine obere Wandfläche 82 auf, die einem Boden 50 der Längsführungsaufnahme 41 gegenüberliegt. Die Wandfläche 82 kann, muss aber nicht mit dem Boden 50 in Berührkontakt sein. Die Querführung bezüglich der Querrichtung Q leisten nämlich Seitenwände 83, 84 des Längsführungsvorsprungs 81, zur Wandfläche 82 winkelig, vorliegend rechtwinkelig sind. Vor die Seitenwände 83, 84 können Führungsrippen vorstehen, so dass der Kontakt mit der Längsführungsaufnahme 51 nur linienförmig oder punktförmig ist. Jedenfalls ist der Längsführungsvorsprung 81 im Querschnitt U-förmig, während die Längsführungsaufnahme 41 komplementär dazu ebenfalls im Querschnitt U-förmig ist (quer zur Längsachse L).

Der Längsführungsvorsprung 81 ist einstückig mit dem Schienenkörper 71. Der Schienenkörper 71 besteht beispielsweise aus Kunststoff oder Metall oder beidem, ist also starr und unbeweglich. Um jedoch in Querrichtung Q eine Einstellmöglichkeiten schaffen, das heißt die Führung des Führungselements 20 in der Querrichtung Q möglichst spielarm auszugestalten, sind Einstelleinrichtungen 42 vorgesehen. Vorliegend sind die ein Stelleinrichtungen beim Führungselement 20 und somit der Hand-Werkzeugmaschine 10 vorgesehen. Es wäre aber denkbar, dass auch die Führungsschiene Verstellmöglichkeiten vorsieht, so dass beispielsweise mindestens eine der beiden Seitenwände 83, 84 auf die andere Seitenwand zu oder von dieser weg verstellbar ist.

In Bezug auf die Längsachse L sind an dem Führungselement 20 zwei Einstelleinrichtungen 42 vorgesehen.

Die Einstelleinrichtungen 42 umfassen Führungskörper 43, 44, deren Führungsflächen einander zugewandt sind. Die Führungskörper 43, 44 sind beispielsweise in der Art von Führungsbacken ausgestaltet.

Während die Führungskörper 43 ortsfest bezüglich der Längsführungsaufnahme 41 sind, ist der andere, gegenüberliegende Führungskörper 44 verstellbar, um den Querabstand zum gegenüberliegenden Führungskörper 43 einzustellen. Vorteilhaft ist es, dass die Führungskörper 43, 44 austauschbare Führungskörper sind, d.h. dass sie bei Verschleiß ohne weiteres ausgewechselt werden können. Weiterhin können zur Einstellung unterschiedlicher Querbreiten der Längsführungsaufnahme 41 auch in der Zeichnung nicht dargestellte alternative Führungskörper 43, 44 vorgesehen sein. Die Führungskörper 43, 44 sind in Halteaufnahmen 45, 46 des Führungselements 20 lösbar montierbar, z.B. verhakt, mit den Halteaufnahmen 45, 46 verrastet, verschraubt oder dergleichen.

Die beweglichen, verstellbaren Führungskörper 44 weisen einen in der Zeichnung bauchig dargestellten verstellbaren und/oder flexiblen Abschnitt auf, auf den von der Rückseite her, das heißt von der der Längsführungsaufnahme 41 abgewandten Seite her, ein Verstellkörper 47 einwirkt. Der Verstellkörper 47 umfasst beispielsweise ein Exzenterelement, das an einem Drehlager 48 drehbar bezüglich des Führungselements 20 gelagert ist. Von der Oberseite 26 her sind die Verstellkörper 47 anhand von Hand-Betätigungselement 49 betätigbar, so dass der Bediener auf diesem Weg die Führungskörper 44 zur den gegenüberliegenden Führungskörpern 43 hin oder von diesen weg verstellen kann.

Für ein Halten der Führungsflächen 27, 76 aneinander, d.h. ein Halten bezüglich der Tiefenrichtung T, mithin also einer Achse, die rechtwinkelig zu den Führungsflächen 27, 72 ist, sind Hintergreifstrukturen 60a, 60b, 60c des Führungselements 20 vorgesehen, die einen Hintergreifvorsprung 85 der Führungsschiene 70 bezüglich der Tiefenrichtung T hintergreifen. In Richtung der Längsachse L oder Arbeitsrichtung A ist jedoch das Führungselement 20 an der Führungsschiene 70 dennoch frei beweglich. Somit können beispielsweise sogenannte Tauchschnitte oder Kappschnitte, bei denen das Werkzeug 14 (Sägeblatt) um die Achse SA schwenkt und in das Werkstück eindringt oder eintaucht, ohne weiteres ausgeführt werden, da nicht nur bei der Eintauchbewegung des Werkzeugs 14 in das Werkstück die Führungsflächen 27, 76 sozusagen aufeinander gedrückt werden, sondern auch beim Austauchen aus dem Werkstück nahe beieinander bleiben, wenn auch vielleicht der Berührkontakt zwischen den Führungsflächen 27, 76 kurzzeitig unterbrochen ist. Weiterhin trägt diese Maßnahme dazu bei, dass man beispielsweise die Hand-Werkzeugmaschine an einem oder beiden der Handgriffe 15, 28 ergreifen und ohne die Führungsschiene 70 separat zu halten transportieren, z.B. vom einen Arbeitsort zum andern Arbeitsort bringen, kann.

Die Hintergreifstrukturen 60a, 60b, 60c sind bezüglich der Längsachse L hintereinander angeordnet, wobei die Hintergreifstrukturen 60a, 60c im Bereich der Vorderseite 24 und der Rückseite 25 angeordnet sind und die Hintergreifstruktur 60c sozusagen zwischen den beiden anderen Hintergreifstrukturen 60a, 60c bezüglich der Längsachse L ist. Die Hintergreifstrukturen 60a, 60b, 60c sind an einer Hintergreifaufnahme 55 des Führungselements 20 der Hand-Werkzeugmaschine 10 angeordnet. Die Hintergreifaufnahme 55 umfasst eine sich in Richtung der Längsachse L erstreckende Längsnut 54, in die der Hintergreifvorsprung 85 eingreift. Die Längsnut 54 ist im Wesentlichen U-förmig und weist einen Boden 56 sowie zu dem Boden 56 winkelige Seitenflächen 57, 58 auf.

Bevorzugt ist es, wenn der Hintergreifvorsprung 85, der vorliegend eine langgestreckte, sich in Richtung der Längsachse L erstreckende Gestalt hat, mit seinen Querseiten nicht in Berührkontakt mit den Seitenflächen 57, 58 ist.

Prinzipiell wäre das aber möglich, so dass auch der Hintergreifvorsprung 85 und die Längsnut 54 das Führungselement 20 oder die Hand-Werkzeugmaschine 10 bezüglich der Querrichtung Q an der Führungsschiene 70 führen.

An dieser Stelle sei weiterhin bemerkt, dass anstelle des durchgängigen, sich über die gesamte Längslänge der Führungsschiene 70 erstreckenden Hintergreifvorsprungs 85 auch mehrere, zueinander beabstandete Hintergreifvorsprünge 85a, 85b, die in der Zeichnung angedeutet sind, vorgesehen sein können, zwischen denen beispielsweise ein Abstand 85c vorhanden ist. Wenn der Abstand 85c kleiner als der Abstand zwischen den Hintergreifstrukturen 60a, 60b, 60c ist, kommt das Führungselement 20 bezüglich der Tiefenrichtung T nicht außer Eingriff mit der Führungsschiene 70.

Das Einführen des Führungselements 20 in den Hintergreifvorsprung 85 wird beispielsweise durch im Bereich der Vorderseite 24 und der Rückseite 25 des Führungselements 20 vorgesehenen Einführungsaufnahmen 59 erleichtert. Aber auch direkt an Hintergreifschenkeln 61, die einander zugewandt vor die Seitenflächen 57, 58 der Längsnut 54 vorstehen und die Hintergreifstrukturen 60 bilden, sind vorzugsweise Einführschrägen 62 vorgesehen, die ein Aufgleisen der Hintergreifaufnahme 55 auf den Hintergreifvorsprung 85 erleichtern. Die Hintergreifschenkel 61 definieren die Hintergreifaufnahme 55 im Querschnitt T-förmig.

Diese Kontur passt genau zu der ebenfalls T-förmigen Querschnittskontur des Hintergreifvorsprungs 85, der einen vor die Führungsfläche 76 vorstehenden Tragschenkel 86 aufweist, von dem seitlich Halteschenkel 87 abstehen. Die Halteschenkel 87 hintergreifen die Hintergreifschenkel 61, greifen also sie in die Zwischenräume zwischen den Hintergreifschenkeln 61 und dem Boden 56 der Längsnut ein.

Anstelle der T-förmigen Hintergreifstrukturen können selbstverständlich auch andere Geometrien vorgesehen sein. Es ist beispielsweise eine L-förmige Konfiguration möglich, bei der beispielsweise einer der beiden Halteschenkel 87 nicht vorhanden wäre.

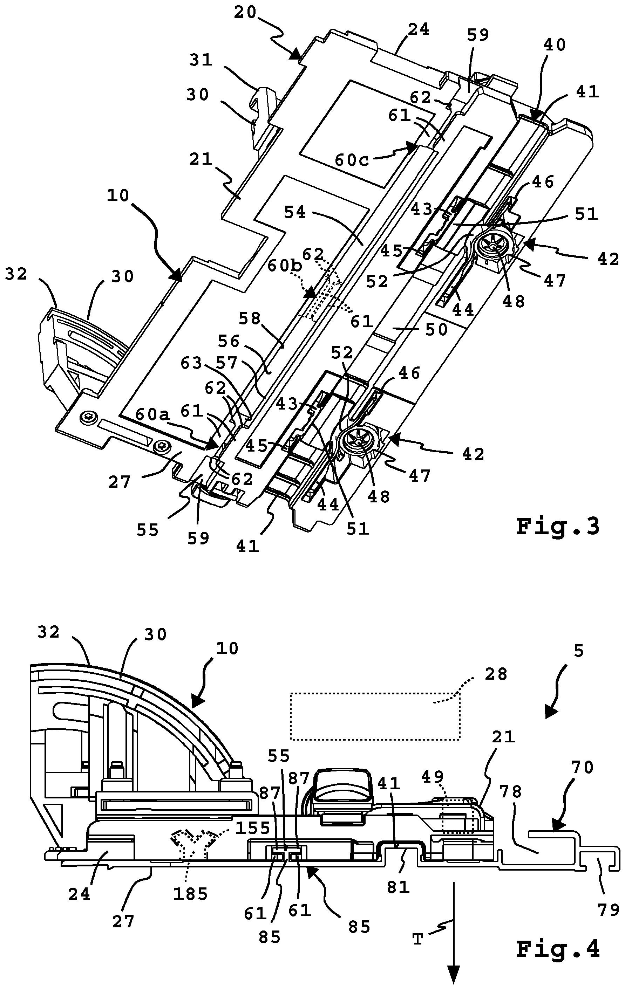

Eine weitere Alternative ist mit einem Hintergreifvorsprung 185 in Figur 4 angedeutet, der eine Y-förmige Gestalt hat. An dieser Stelle sei auch noch die Variante erwähnt, dass selbstverständlich mehrere in Querrichtung Q nebeneinander angeordnete Hintergreifstrukturen vorgesehen sein können, beispielsweise sowohl der Hintergreifvorsprung 85 mit den zugeordneten Hintergreifstrukturen des Führungselements 20 sowie der Hintergreifvorsprung 185, der entsprechend komplementäre, der Zeichnung nicht näher als Linien aufgelöste Hintergreifstrukturen einer Hintergreifaufnahme 155 hat.

Die freien Endbereiche der Halteschenkel 87, also die von dem Tragschenkel 86 entferntesten Bereiche, können beispielsweise an den Seitenflächen 57, 58 entlang gleiten oder, wie schon erwähnt, davon einen geringen Abstand haben.

Eine Oberseite 88 des Hintergreifvorsprungs 85, also sozusagen die parallel zur Führungsfläche 76 verlaufende Oberseite der Halteschenkel 87, hat zweckmäßigerweise einen Abstand zu dem Boden 56 der Längsnut 54.

Beide Maßnahmen tragen dazu bei, dass sich der Hintergreifvorsprung 85 in der Hintergreifaufnahme 55 möglichst nicht verkantet.

Oberhalb der Hintergreifschenkel 61 ist am Führungselement 20 vorzugsweise ein Freiraum 63 vorgesehen. Die Hintergreifschenkel 61 stehen zur Oberseite 26 des Führungselements 20 frei. Mithin ist also der Boden 56 der Hintergreifaufnahme 55 nicht durchgängig, sondern hat im Bereich der Hintergreifschenkel 61 eine Unterbrechung. Diese Maßnahme ist insbesondere zur Herstellung des Führungselements 20 vorteilhaft, weil nämlich das Führungselement 20 leichter aus nicht dargestellten Gussformteilen entformbar ist, die zur Ausformung der Oberseite 26 und der Unterseite 27 des Führungselements 20 vorgesehen sind.

## Patentansprüche

1. Führungssystem umfassend eine ein Führungselement (20) aufweisende Hand-Werkzeugmaschine (10) und eine mit ihrer Unterseite auf einen Untergrund auflegbare Führungsschiene (70), an deren Oberseite eine Schienen-Führungsfläche für eine Führungselement-Führungsfläche (27) an der Unterseite des Führungselements (20) der Hand-Werkzeugmaschine (10) vorgesehen ist, wobei an den Führungsflächen (27, 76) mindestens ein Längsführungsvorsprung (81) und mindestens eine Längsführungsaufnahme (41) vorgesehen sind, die zur Längsführung der Hand-Werkzeugmaschine (10) entlang einer Längsachse (L) der Führungsschiene (70) und des Führungselements (20) ineinander eingreifen, wobei zwischen der Führungsschiene (70) und dem Führungselement (20) Hintergreifstrukturen vorhanden sind, die das Führungselement (20) in einer zu den Führungsflächen (27, 76) winkeligen, insbesondere rechtwinkeligen, Tiefenrichtung (T) an der Führungsschiene (70) in einem Sinne halten, dass die Führungsflächen (27, 76) in Kontakt bleiben, wobei die Hintergreifstrukturen mindestens einen vor die Schienen-Führungsfläche vorstehenden Hintergreifvorsprung (85) zum Eingriff in mindestens eine sich an der Führungselement-Führungsfläche (27) parallel zu der Längsachse (L) erstreckende Hintergreifaufnahme (55) umfassen, und wobei der mindestens eine Hintergreifvorsprung (85) parallel zu der Längsachse (L) verläuft und/oder einen Bestandteil einer Anordnung von parallel zu der Längsachse (L) hintereinander angeordneten Hintergreifvorsprüngen bildet und die mindestens eine Hintergreifaufnahme (55) sich parallel zu der Längsachse (L) erstreckt oder einen Bestandteil einer Anordnung von parallel zu der Längsachse (L) hintereinander angeordneten Hintergreifaufnahmen (55) bildet, **dadurch gekennzeichnet, dass** an der Führungsschiene (70) nur ein einziger sich in Richtung der Längsachse (L) erstreckender Hintergreifvorsprung (85) oder nur eine einzige Anordnung linear hintereinander entlang der Längsachse (L) angeordneter Hintergreifvorsprünge vorgesehen ist, wobei der eine Hintergreifvorsprung (85) oder die Anordnung der Hintergreifvorsprünge etwa mittig oder in einem mittleren Bereich zwischen sich parallel zur Längsrichtung erstreckenden Seiten der Führungsschiene (70) angeordnet ist, oder dass bei dem Führungselement nur eine sich in Richtung der Längsachse (L) erstreckende Hintergreifaufnahme (55) oder nur eine einzige Anordnung parallel zu der Längsachse (L) hintereinander angeordneter Hintergreifaufnahmen vorhanden ist, wobei die eine Hintergreifaufnahme (55) oder die einzige Anordnung der Hintergreifaufnahmen etwa mittig oder in einem mittleren Bereich zwischen sich parallel zur Längsrichtung erstreckenden Seiten des Führungselements (20) der Hand-Werkzeugmaschine (10) angeordnet ist.

2. Führungssystem nach Anspruch 1, **dadurch gekennzeichnet, dass** der mindestens eine Hintergreifvorsprung (85) und die mindestens eine Hintergreifaufnahme (55) im Querschnitt T-förmig oder L-förmig oder V-förmig sind oder im Querschnitt T-förmige oder L-förmige oder V-förmige, sich in Richtung der Längsachse (L) erstreckende Hintergreifabschnitte und/oder Schwalbenschwanzkonturen aufweisen.

3. Führungssystem nach Anspruch 1 oder 2, **dadurch gekennzeichnet, dass** der mindestens eine Hintergreifvorsprung (85) pilzförmig ist und/oder die mindestens eine Hintergreifaufnahme (55) einen gabelförmigen Querschnitt aufweist und/oder dass die mindestens eine Hintergreifaufnahme (55) nicht vor die Führungselement-Führungsfläche (27) der Hand-Werkzeugmaschine (10) vorsteht.

4. Führungssystem nach einem der vorhergehenden Ansprüche, **dadurch gekennzeichnet, dass** die mindestens eine Hintergreifaufnahme (55) des Führungselements (20) der Hand-Werkzeugmaschine (10) an einer sich parallel zu der Längsachse (L) erstreckenden Längsnut (54) angeordnet ist und von mindestens einem Hintergreifschenkel (61) begrenzt ist, der zu einem Innenraum der Längsnut (54) zum Hintergreifen des mindestens einen Hintergreifvorsprungs (85) vorsteht, wobei zweckmäßigerweise eine Unterseite des mindestens einen Hintergreifschenkels (61) mit der Führungselement-Führungsfläche (27) einstückig ist oder mit dieser fluchtet.

5. Führungssystem nach einem der vorhergehenden Ansprüche, **dadurch gekennzeichnet, dass** die Hintergreifstrukturen, insbesondere der Hintergreifschenkel (61), mindestens eine, insbesondere bezüglich der Längsachse (L) schräg verlaufende, Einführschräge (62) aufweisen.

6. Führungssystem nach einem der vorhergehenden Ansprüche, **dadurch gekennzeichnet, dass** das Führungselement (20) der Hand-Werkzeugmaschine (10) mindestens zwei, insbesondere drei, bezüglich der Längsachse (L) in einem Abstand zueinander angeordnete Hintergreifstrukturen aufweist, wobei in dem Abstand keine den mindestens einen Hintergreifvorsprung (85) der Führungsschiene (70) hintergreifende Hintergreifkontur oder keine den mindestens einen Hintergreifvorsprung (85) in formschlüssigem Kontakt hintergreifende Hintergreifkontur vorgesehen ist.

7. Führungssystem nach einem der vorhergehenden Ansprüche, **dadurch gekennzeichnet, dass** das Führungselement (20) der Hand-Werkzeugmaschine (10) mindestens zwei, insbesondere drei, in Bezug auf die Längsachse (L) in einem Abstand zueinander angeordnete Hintergreifaufnahmen (55) aufweist, wobei in dem Abstand der mindestens eine Hintergreifvorsprung (85) oder die Anordnung von Hintergreifvorsprüngen nicht durch eine Hintergreifaufnahme (55) oder einen Hintergreifschenkel (61) des Führungselements (20) der Hand-Werkzeugmaschine (10) hintergriffen ist oder mit einer Hintergreifaufnahme (55) oder einem Hintergreifschenkel (61) des Führungselements (20) in formschlüssigem Kontakt ist oder in Bezug auf die Tiefenrichtung (T) keine Abstützung an dem Führungselement (20) hat.

8. Führungssystem nach einem der vorhergehenden Ansprüche, **dadurch gekennzeichnet, dass** der mindestens eine Hintergreifvorsprung (85) einen vor die Schienen-Führungsfläche, insbesondere rechtwinkelig, vorstehenden Tragschenkel (86) und mindestens einen von dem Tragschenkel (86) winkelig, insbesondere rechtwinkelig, abstehenden Halteschenkel (87) zum Hintergreifen der mindestens einen Hintergreifaufnahme (55) des Führungselements (20) der Hand-Werkzeugmaschine (10) aufweist.

9. Führungssystem nach einem der vorhergehenden Ansprüche, **dadurch gekennzeichnet, dass** sich parallel zu der Längsachse (L) erstreckende Seitenflanken des Hintergreifvorsprungs (85) und sich entlang der Längsachse (L) erstreckende Innenflanken der Hintergreifaufnahme (55) nicht in einem Führungskontakt, insbesondere nicht in einem Berührkontakt, quer zu der Längsachse (L) sind und/oder dass das Führungselement (20) der Hand-Werkzeugmaschine (10) quer zu der Längsachse (L) ausschließlich durch den Längsführungsvorsprung (81) und die Längsführungsaufnahme (41) geführt ist.

10. Führungssystem nach einem der vorhergehenden Ansprüche, **dadurch gekennzeichnet, dass** sie mindestens eine Einstelleinrichtung (42) zur Verstellung eines Querabstands zwischen einander gegenüberliegenden Führungsflächen der mindestens einen Längsführungsaufnahme (41) oder einander entgegengesetzter und voneinander abgewandter Außenseiten des mindestens einen Längsführungsvorsprungs (81) aufweist.

11. Führungssystem nach einem der vorhergehenden Ansprüche, **dadurch gekennzeichnet, dass** einander zugewandte, sich parallel zu den Führungsflächen (27, 76) erstreckende Flächen des Längsführungsvorsprungs (81) und der Längsführungsaufnahme (41) und/oder des mindestens einen Hintergreifvorsprungs (85) und der mindestens einen Hintergreifaufnahme (55) nicht in einem Führungskontakt miteinander sind und/oder der Hintergreifvorsprung (85) als eine Längsrippe ausgestaltet ist.

12. Führungssystem nach einem der vorhergehenden Ansprüche, **dadurch gekennzeichnet, dass** die Hand-Werkzeugmaschine (10) einen oberhalb der Längsführungsaufnahme (41) und/oder oberhalb der Hintergreifaufnahme (55), insbesondere in Arbeitsrichtung (A) vorn am Führungselement (20) angeordnet, angeordneten Handgriff zum Führen der Hand-Werkzeugmaschine (10) aufweist und/oder dass die Führungsschiene (70) zwischen einer langgestreckten Gebrauchsstellung zum Auflegen auf dem Untergrund und einer demgegenüber kompakteren, insbesondere aufgewickelten, Transportstellung verstellbar ist.

## Claims

1. Guide system comprising a hand-held machine tool (10) having a guide element (20) and a guide rail (70), which can be placed on a ground with its underside and on the top side of which a rail guide surface for a guide element guide surface (27) on the underside of the guide element (20) of the hand-held machine tool (10) is provided, wherein at the guide surfaces (27, 76) at least one longitudinal guide projection (81) and at least one longitudinal guide receptacle (41) are provided, which engage with one another for the longitudinal guidance of the hand-held machine tool (10) along a longitudinal axis (L) of the guide rail (70) and the guide element (20), wherein between the guide rail (70) and the guide element (20) there exist engagement-from-behind structures which hold the guide element (20) at the guide rail (70) in a depth direction (T) oriented at an angle, in particular a right angle, at the guide surfaces (27, 76) in such a way that the guide surfaces (27, 76) remain in contact, wherein the engagement-from-behind structures comprise at least one engagement-from-behind projection (85) projecting in front of the rail guide surface for engagement with at least one engagement-from-behind receptacle (55) extending at the guide element guide surface (27) parallel to the longitudinal axis (L), and wherein the at least one engagement-from-behind projection (85) extends parallel to the longitudinal axis (L) and/or forms a part of an arrangement of engagement-from-behind projections arranged one behind the other parallel to the longitudinal axis (L) and the at least one engagement-from-behind receptacle (55) extends parallel to the longitudinal axis (L) or forms a part of an arrangement of engagement-from-behind receptacles (55) arranged one behind the other parallel to the longitudinal axis (L), **characterised in that** only one single engagement-from-behind projection (85) extending in the direction of the longitudinal axis (L) or only one single arrangement of engagement-from-behind projections arranged linearly one behind the other along the longitudinal axis (L) is provided on the guide rail (70), wherein the one engagement-from-behind projection (85) or the arrangement of engagement-from-behind projections is located approximately in the middle or in a central region between sides of the guide rail (70) extending parallel to the longitudinal direction, or **in that** the guide element only has one engagement-from-behind receptacle (55) extending in the direction of the longitudinal axis (L) or only one single arrangement of engagement-from-behind receptacles arranged one behind the other parallel to the longitudinal axis (L), wherein the one engagement-from-behind receptacle (55) or the single arrangement of engagement-from-behind receptacles is located approximately in the middle or in a central region between sides of the guide element (20) of the hand-held machine tool (10) which extend parallel to the longitudinal direction.

2. Guide system according to claim 1, **characterised in that** the at least one engagement-from-behind projection (85) and the at least one engagement-from-behind receptacle (55) are T-shaped or L-shaped or Y-shaped in cross-section or have T-shaped or L-shaped or Y-shaped engagement-from-behind sections and/or dovetail contours in cross-section which extend in the direction of the longitudinal axis (L).

3. Guide system according to Claim 1 or 2, **characterised in that** the at least one engagement-from-behind projection (85) is mushroom-shaped and/or the at least one engagement-from-behind receptacle (55) has a fork-shaped cross-section and/or **in that** the at least one engagement-from-behind receptacle (55) does not project in front of the guide element guide surface (27) of the hand-held machine tool (10).

4. Guide system according to any of the preceding claims, **characterised in that** the at least one engagement-from-behind receptacle (55) of the guide element (20) of the hand-held machine tool (10) is located at a longitudinal groove (54) extending parallel to the longitudinal axis (L) and is bounded by at least one engagement-from-behind leg (61) projecting towards an interior of the longitudinal groove (54) to engage the at least one engagement-from-behind projection (85) from behind, wherein an underside of the at least one engagement-from-behind leg (61) is expediently integral with the guide element guide surface (27) or in alignment therewith.

5. Guide system according to any of the preceding claims, **characterised in that** the engagement-from-behind structures, in particular the engagement-from-behind leg (61), have/has at least one lead-in chamfer (62), in particular extending at an angle with respect to the longitudinal axis (L).

6. Guide system according to any of the preceding claims, **characterised in that** the guide element (20) of the hand-held machine tool (10) has at least two, in particular three, engagement-from-behind structures arranged at a distance from one another with respect to the longitudinal axis (L), wherein no engagement-from-behind contour engaging the at least one engagement-from-behind projection (85) of the guide rail (70) from behind or no engagement-from-behind contour engaging the at least one engagement-from-behind projection (85) from behind in positive contact is provided in the gap.

7. Guide system according to any of the preceding claims, **characterised in that** the guide element (20) of the hand-held machine tool (10) has at least two, in particular three, engagement-from-behind receptacles (55) arranged at a distance from one another with respect to the longitudinal axis (L), wherein the at least one engagement-from-behind projection (85) or the arrangement of engagement-from-behind projections is not engaged from behind by an engagement-from-behind receptacle (55) or an engagement-from-behind leg (61) of the guide element (20) of the hand-held machine tool (10), or in positive contact with an engagement-from-behind receptacle (55) or an engagement-from-behind leg (61) of the guide element (20), or supported at the guide element (20) with respect to the depth direction (T) in the gap.

8. Guide system according to any of the preceding claims, **characterised in that** the at least one engagement-from-behind projection (85) has a support leg (86) which projects in particular at a right angle in front of the rail guide surface, and at least one holding leg (87) which projects at an angle, in particular at a right angle, from the support leg (86) to engage the at least one engagement-from-behind receptacle (55) of the guide element (20) of the hand-held machine tool (10) from behind.

9. Guide system according to any of the preceding claims, **characterised in that** side flanks of the engagement-from-behind projection (85) extending parallel to the longitudinal axis (L) and inner flanks of the engagement-from-behind receptacle (55) extending along the longitudinal axis (L) are not in a guide contact, in particular not in a touching contact, transverse to the longitudinal axis (L) and/or **in that** the guide element (20) of the hand-held machine tool (10) is guided transverse to the longitudinal axis (L) exclusively by the longitudinal guide projection (81) and the longitudinal guide receptacle (41).

10. Guide system according to any of the preceding claims, **characterised in that** it has at least one adjusting device (42) for adjusting a transverse distance between mutually opposite guide surfaces of the at least one longitudinal guide receptacle (41) or between mutually opposite and mutually averted outsides of the at least one longitudinal guide projection (81).

11. Guide system according to any of the preceding claims, **characterised in that** mutually facing surfaces of the longitudinal guide projection (81) and the longitudinal guide receptacle (41) and/or of the at least one engagement-from-behind projection (85) and the at least one engagement-from-behind receptacle (55), which surfaces extend parallel to the guide surfaces (27, 76), are not in a guide contact with each other, and/or **in that** the engagement-from-behind projection (85) is designed as a longitudinal rib.

12. Guide system according to any of the preceding claims, **characterised in that** the hand-held machine tool (10) has a handle for guiding the hand-held machine tool (10), which handle is located above the longitudinal guide receptacle (41) and/or above the engagement-from-behind receptacle (55), in particular at the front of the guide element (20) in the working direction (A), and/or **in that** the guide rail (70) is adjustable between an elongated position of use for placing on the ground and a comparatively more compact, in particular rolled-up, transport position.

## Revendications

1. Système de guidage comprenant une machine-outil manuelle (10) présentant un élément de guidage (20) et un rail de guidage (70) pouvant être placé par sa face inférieure sur un sol, sur la face supérieure duquel une surface de guidage de rail pour une surface de guidage d'élément de guidage (27) est prévue sur la face inférieure de l'élément de guidage (20) de la machine-outil manuelle (10), dans lequel au moins une partie faisant saillie de guidage longitudinal (81) et au moins un logement de guidage longitudinal (41) sont prévus sur les surfaces de guidage (27, 76), qui viennent en prise entre elles le long d'un axe longitudinal (L) du rail de guidage (70) et de l'élément de guidage (20) pour le guidage longitudinal de la machine-outil manuelle (10), dans lequel sont présentes entre le rail de guidage (70) et l'élément de guidage (20) des structures de prise par l'arrière, qui maintiennent l'élément de guidage (20) dans un sens de la profondeur (T), formant un angle, en particulier un angle droit, par rapport aux surfaces de guidage (27, 76), sur le rail de guidage (70) au sens que les surfaces de guidage (27, 76) restent en contact, dans lequel les structures de prise par l'arrière comprennent au moins une partie faisant saillie de prise par l'arrière (85) faisant saillie devant la surface de guidage de rail, destinée à venir en prise avec au moins un logement de prise par l'arrière (55) s'étendant de manière parallèle par rapport à l'axe longitudinal (L) sur la surface de guidage d'élément de guidage (27), et dans lequel l'au moins une partie faisant saillie de prise par l'arrière (85) s'étend de manière parallèle par rapport à l'axe longitudinal (L) et/ou fait partie intégrante d'un ensemble de parties faisant saillie de prise par l'arrière disposées les unes derrière les autres de manière parallèle par rapport à l'axe longitudinal (L) et l'au moins un logement de prise par l'arrière (55) s'étend de manière parallèle à l'axe longitudinal (L) ou fait partie intégrante d'un ensemble de logements de prise par l'arrière (55) disposés les uns derrière les autres de manière parallèle par rapport à l'axe longitudinal (L), **caractérisé en ce que** sur le rail de guidage (70) seule une partie faisant saillie de prise par l'arrière (85) unique s'étendant en direction de l'axe longitudinal (L) ou seul un ensemble unique de parties faisant saillie de prise par l'arrière disposées les unes derrière les autres de manière linéaire de long de l'axe longitudinal (L) est prévu, dans lequel une partie faisant saillie de prise par l'arrière (85) ou l'ensemble de parties faisant saillie de prise par l'arrière est disposé à peu près au milieu ou dans une zone médiane entre des côtés s'étendant de manière parallèle au sens longitudinal du rail de guidage (70), ou **en ce que** pour l'élément de guidage, seul un logement de prise par l'arrière (55) s'étendant en direction de l'axe longitudinal (L) ou seul un ensemble unique de logements de prise par l'arrière disposés les uns derrière les autres de manière parallèle à l'axe longitudinal (L) est présent, dans lequel l'au moins un logement de prise par l'arrière (55) ou l'ensemble unique de logements de prise par l'arrière est disposé approximativement au centre ou dans une zone centrale entre des côtés, s'étendant de manière parallèle par rapport au sens longitudinal, de l'élément de guidage (20) de la machine-outil manuelle (10).

2. Système de guidage selon la revendication 1, **caractérisé en ce que** l'au moins une partie faisant saillie de prise par l'arrière (85) et l'au moins un logement de prise par l'arrière (55) sont dans la section transversale en forme de T ou en forme de L ou en forme de Y ou présentent des sections de prise par l'arrière et/ou des contours en queue d'aronde s'étendant en direction de l'axe longitudinal (L), en forme de T ou en forme de L ou en forme de Y dans la section transversale.

3. Système de guidage selon la revendication 1 ou 2, **caractérisé en ce que** l'au moins une partie faisant saillie de prise par l'arrière (85) est en forme de champignon et/ou l'au moins un logement de prise par l'arrière (55) présente une section transversale en forme de fourche et/ou **en ce que** l'au moins un logement de prise par l'arrière (55) ne fait pas saillie devant la surface de guidage d'élément de guidage (27) de la machine-outil manuelle (10).

4. Système de guidage selon l'une quelconque des revendications précédentes, **caractérisé en ce que** l'au moins un logement de prise par l'arrière (55) de l'élément de guidage (20) de la machine-outil manuelle (10) est disposé sur une rainure longitudinale (54) s'étendant de manière parallèle par rapport à l'axe longitudinal (L) et est limité par au moins une branche de prise par l'arrière (61), qui fait saillie en direction d'un espace intérieur de la rainure longitudinale (54) pour venir en prise par l'arrière avec l'au moins une partie faisant saillie de prise par l'arrière (85), dans lequel de manière opportune une face inférieure de l'au moins une branche de prise par l'arrière (61) est d'un seul tenant avec la surface de guidage d'élément de guidage (27) ou est alignée avec celle-ci.

5. Système de guidage selon l'une quelconque des revendications précédentes, **caractérisé en ce que** les structures de prise par l'arrière, en particulier la branche de prise par l'arrière (61), présentent au moins un chanfrein d'introduction (62) s'étendant en particulier de manière oblique par rapport à l'axe longitudinal (L).

6. Système de guidage selon l'une quelconque des revendications précédentes, **caractérisé en ce que** l'élément de guidage (20) de la machine-outil manuelle (10) présente au moins deux, en particulier trois, structures de prise par l'arrière disposées à un espacement les unes par rapport aux autres par rapport à l'axe longitudinal (L), dans lequel aucun contour de prise par l'arrière venant en prise par l'arrière avec l'au moins une partie faisant saillie de prise par l'arrière (85) du rail de guidage (70) ni aucun contour de prise par l'arrière venant en prise par l'arrière avec un contact à complémentarité de forme avec l'au moins une partie faisant saillie de prise par l'arrière (85) ne sont prévus dans l'espacement.

7. Système de guidage selon l'une quelconque des revendications précédentes, **caractérisé en ce que** l'élément de guidage (20) de la machine-outil manuelle (10) présente au moins deux, en particulier trois, logements de prise par l'arrière (55) disposés à un espacement les uns par rapport aux autres par rapport à l'axe longitudinal (L), dans lequel l'au moins une partie faisant saillie de prise par l'arrière (85) ou l'ensemble de parties faisant saillie de prise par l'arrière n'est pas en prise par l'arrière, dans l'espacement, avec un logement de prise par l'arrière (55) ou une branche de prise par l'arrière (61) de l'élément de guidage (20) de la machine-outil manuelle (10) ou est en contact par complémentarité de forme avec un logement de prise par l'arrière (55) ou une branche de prise par l'arrière (61) de l'élément de guidage (20) ou ne présente aucun appui sur l'élément de guidage (20) par rapport au sens de la profondeur (T).

8. Système de guidage selon l'une quelconque des revendications précédentes, **caractérisé en ce que** l'au moins une partie faisant saillie de prise par l'arrière (85) présente une branche porteuse (86) faisant saillie devant la surface de guidage de rail, formant en particulier un angle droit et au moins une branche de maintien (87) dépassant en formant un angle de la branche porteuse (86), en particulier un angle droit, pour venir en prise par l'arrière avec l'au moins un logement de prise par l'arrière (55) de l'élément de guidage (20) de la machine-outil manuelle (10).

9. Système de guidage selon l'une quelconque des revendications précédentes, **caractérisé en ce que** des flancs latéraux, s'étendant de manière parallèle par rapport à l'axe longitudinal (L), de la partie faisant saillie de prise par l'arrière (85) et des flancs intérieurs, s'étendant le long de l'axe longitudinal (L), du logement de prise par l'arrière (55) ne sont pas en contact de guidage, en particulier ne sont pas en contact physique, de manière transversale par rapport à l'axe longitudinal (L), et/ou que l'élément de guidage (20) de la machine-outil manuelle (10) est guidé de manière transversale par rapport à l'axe longitudinal (L) exclusivement par la partie faisant saillie de guidage longitudinal (81) et le logement de guidage longitudinal (41).

10. Système de guidage selon l'une quelconque des revendications précédentes, **caractérisé en ce qu'**il présente un dispositif de réglage (42) pour ajuster un espacement transversal entre des surfaces de guidage se faisant face les unes les autres de l'au moins un logement de guidage longitudinal (41) ou des côtés extérieurs opposés les uns aux autres et détournés les uns des autres de l'au moins une partie faisant saillie de guidage longitudinal (81).

11. Système de guidage selon l'une quelconque des revendications précédentes, **caractérisé en ce que** des surfaces tournées les unes vers les autres, s'étendant de manière parallèle par rapport aux surfaces de guidage (27, 76) de la partie faisant saillie de guidage longitudinal (81) et du logement de guidage longitudinal (41) et/ou de l'au moins une partie faisant saillie de prise par l'arrière (85) et de l'au moins un logement de prise par l'arrière (55) ne sont pas en contact par guidage les unes avec les autres et/ou la partie faisant saillie de prise par l'arrière (85) est configurée en tant qu'une nervure longitudinale.

12. Système de guidage selon l'une quelconque des revendications précédentes, **caractérisé en ce que** la machine-outil manuelle (10) présente une poignée disposée au-dessus du logement de guidage longitudinal (41) et/ou au-dessus du logement de prise par l'arrière (55), en particulier dans la direction de travail (A) à l'avant sur l'élément de guidage (20), pour guider la machine-outil manuelle (10), et/ou que le rail de guidage (70) peut être ajusté entre une position d'utilisation étirée en longueur pour le placer sur le sol et une position de transport plus compact à l'inverse, en particulier enroulée.
